(19) Europäisches Patentamt
European Patent Office
Office européen des brevets

(11) Veröffentlichungsnummer : **0 301 300 B1**

# (12) EUROPÄISCHE PATENTSCHRIFT

(45) Veröffentlichungstag der Patentschrift : **25.09.91 Patentblatt 91/39**

(51) Int. Cl.[5] : **B05D 7/16**, B05D 7/26, C09D 4/00

(21) Anmeldenummer : **88111048.0**

(22) Anmeldetag : **11.07.88**

## (54) Verfahren zur Herstellung eines mehrschichtigen, schützenden und/oder dekorativen Überzugs und wasserverdünnbare Beschichtungszusammensetzungen.

Verbunden mit 88905824.4/0376954 (europäische Anmeldenummer/Veröffentlichungsnummer) durch Entscheidung vom 01.02.91.

(30) Priorität : **31.07.87 DE 3725371**

(43) Veröffentlichungstag der Anmeldung : **01.02.89 Patentblatt 89/05**

(45) Bekanntmachung des Hinweises auf die Patenterteilung : **25.09.91 Patentblatt 91/39**

(84) Benannte Vertragsstaaten : **AT BE CH DE ES FR GB IT LI NL SE**

(56) Entgegenhaltungen : **US-A- 4 558 090**

(73) Patentinhaber : **BASF Lacke + Farben Aktiengesellschaft
Max-Winkelmann-Strasse 80
W-4400 Münster (DE)**

(72) Erfinder : **Müller, Bodo, Dr.
Mergentheimer Strasse 8
W-8700 Würzburg (DE)**
Erfinder : **Martin, Eric
Sartoriusstrasse 10
W-8700 Würzburg (DE)**

(74) Vertreter : **Leifert, Elmar, Dr.
BASF Lacke + Farben AG Patentabteilung
Max-Winkelmann-Strasse 80 Postfach 61 23
W-4400 Münster (DE)**

EP 0 301 300 B1

Anmerkung : Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue Saint-Denis, 75001 PARIS

## Beschreibung

Die Erfindung betrifft ein Verfahren zur Herstellung eines mehrschichtigen, schützenden und/oder dekorativen Überzuges auf einer Substratoberfläche, bei welchem

(1) als Basisbeschichtungszusammensetzung eine pseudoplastische und/oder thixotrope wasserverdünnbare Basisbeschichtungszusammensetzung aufgebracht wird, wobei diese Basisbeschichtungszusammensetzung Wasser, ggf. organische Lösemittel, ein wasserverdünnbares Bindemittel, vernetzte Polymermikroteilchen mit einem Durchmesser von 0,01 bis 10/μm, Pigmentteilchen und ein Verdickungsmittel enthält,

(2) aus der in Stufe (1) aufgebrachten Zusammensetzung ein Polymerfilm auf der Oberfläche gebildet wird,

(3) auf der so erhaltenen Basisschicht eine geeignete transparente Deckschichtzusammensetzung aufgebracht wird und anschließend

(4) die Basisschicht zusammen mit der Deckschicht eingebrannt wird.

Insbesondere bei der Automobillackierung, aber auch in anderen Bereichen, in denen man Überzüge mit guter dekorativer Wirkung und gleichzeitig einen guten Korrosionsschutz wünscht, ist es bekannt, Substrate mit mehreren, übereinander angeordneten Überzugsschichten zu versehen.

Mehrschichtlackierungen werden bevorzugt nach dem sogenannten "base coat/clear coat" -Verfahren aufgebracht, d.h. es wird ein pigmentierter Basislack vorlackiert und nach kurzer Ablüftzeit ohne Einbrennschritt (naß-in-naß-Verfahren) mit Klarlack überlackiert. Anschließend werden Basislack und Klarlack zusammen eingebrannt.

Besonders große Bedeutung hat das "base coat/clear coat" -Verfahren bei der Applikation von Automobil-Metalleffektlacken erlangt.

Wirtschaftliche und ökologische Gründe haben dazu geführt, daß versucht wurde, bei der Herstellung von Mehrschichtüberzüßen wäßrige Basisbeschichtungszusammensetzungen einzusetzen.

Die Beschichtungszusammensetzungen zur Herstellung dieser Basisschichten müssen nach dem heute üblichen rationellen "naß-in-naß"-Verfahren verarbeitbar sein, d.h. sie müssen nach einer möglichst kurzen Vortrocknungszeit ohne Einbrennschritt mit einer transparenten Deckschicht überlackiert werden können, ohne störende Anlöseerscheinungen und "strike-in" -Phänomene zu zeigen.

Bei der Entwicklung von Beschichtungszusammensetzungen zur Herstellung von Basisschichten von Metalleffektlacken des base coat/clear coat-Typs müssen außerdem noch weitere Probleme gelöst werden. Der Metalleffekt hängt entscheidend von der Orientierung der Metallpigmentteilchen im Lackfilm ab. Ein im "naß-in-naß" -Verfahren verarbeitbarer Metalleffektbasislack muß demnach Lackfilme liefern, in denen die Metallpigmente nach der Applikation in einer günstigen räumlichen Orientierung vorliegen und in denen diese Orientierung schnell so fixiert wird, daß sie im Laufe des weiteren Lackierprozesses nicht gestört werden kann.

In der EP-A-38127 wird ein Verfahren zur Herstellung mehrschichtiger Überzüge des base coat/clear coat-Typs offenbart, bei dem wäßrige Basisbeschichtungszusammensetzungen verwendet werden, die stabil dispergierte vernetzte Polymermikroteilchen enthalten und einen pseudoplastischen oder thixotropen Charakter aufweisen.

In der EP-A-38127 werden vorzugsweise Polymermikroteilchen aus vernetzten Polyacrylaten eingesetzt. Es sollen aber auch Polymermikroteilchen aus vernetzten Polykondensaten, wie z.B. vernetzten Polyestermikroteilchen verwendbar sein.

Es hat sich aber herausgestellt, daß oft Unverträglichkeitserscheinungen auftreten, wenn die in der EP-A-38127 empfohlenen Polymermikroteilchen in Basisbeschichtungszusammensetzungen inkorporiert werden. Diese Unverträglichkeitserscheinungen sind auf unerwünschte Wechselwirkungen zwischen den Polymermikroteilchen und anderen Lackbestandteilen, insbesondere auf unerwünschte Wechselwirkungen zwischen den Polymermikroteilchen und Bindemittelkomponenten, zurückzuführen.

Wenn z.B. der Brechungsindex der vernetzten Polymermikroteilchen nicht sorgfältig auf den Brechungsindex der übrigen Bindemittelbestandteile abgestimmt wird, dann kommt es infolge von Lichtstreueffekten zur Bildung von trüben Lackfilmen.

Die oben erwähnten Unverträglichkeitserscheinungen treten insbesondere bei wäßrigen Beschichtungszusammensetzungen auf, die Polyurethane als Bindemittel enthalten. Beschichtungszusammensetzungen dieses Typs sind in der US-PS-4,423,179, US-PS-4,558,090 und DE-OS-3545618 beschrieben.

In der EP-A-38127 wird empfohlen, den wäßrigen Basisbeschichtungszusammensetzungen solche wasserlöslichen Polymere (sogenannte Verdickungsmittel) zuzusetzen, die der Basisbeschichtungszusammensetzung pseudoplastische und/oder thixotrope Eigenschaften verleihen.

Dem Fachmann steht eine sehr große Anzahl verschiedener Verdickungsmittel zur Verfügung, mit deren Hilfe er den wäßrigen Basisbeschichtungszusammensetzungen die notwendigen rheologischen Eigenschaften verleihen kann. Der Zusatz von Verdickungsmitteln führt jedoch zu Unverträglichkeitserscheinungen und/oder

feuchtigkeitsempfindlicheren Filmen und/oder schlechteren Metalleffekten und/oder Haftungsstörungen. Diese Nachteile treten insbesondere bei wäßrigen Beschichtungszusammensetzungen auf, die Polyurethane als Bindemittel enthalten.

Die der vorliegenden Erfindung zugrundeliegende Aufgabenstellung besteht in der Bereitstellung eines neuen Verfahrens gemäß Oberbegriff des ersten Patentanspruchs. Mit Hilfe dieses neuen Verfahrens sollen die oben geschilderten Probleme des Standes der Technik überwunden bzw. vermindert werden.

Diese Aufgabe wird überraschenderweise durch ein Verfahren gemäß Oberbegriff des ersten Patentanspruchs gelöst, das dadurch gekennzeichnet ist, daß die Basisbeschichtungszusammensetzung 0,1 bis 4,0 Gew.-%, bevorzugt 1,0 bis 2,0 Gew.-%, bezogen auf den Bindemittelfestkörper, Xanthan und 5 bis 80 Gew.-%, bevorzugt 30 bis 70 Gew.-%, besonders bevorzugt 40 bis 60 Gew.-%, bezogen auf den Bindemittelfestkörper, vernetzte Polymermikroteilchen enthält, wobei die vernetzten Polymermikroteilchen erhältlich sind, indem

(a) ein Gemisch aus einer Komponente (A) und einer Komponente (B) in einem wäßrigen Medium dispergiert wird, wobei

— die Komponente (A) aus einem oder mehreren mindestens zwei Hydroxylgruppen enthaltenden Polyesterpolyol(en) und

— die Komponente (B) aus einer oder mehreren ggf. blockierten Polyisocyanatverbindung(en)

besteht und wobei die Komponente (A) und/oder (B) über eine zur Bildung einer stabilen Dispersion ausreichende Anzahl ionischer Gruppen verfügt und wenigstens ein Teil der Komponente (A) und/oder (B) mehr als zwei Hydroxyl- bzw. ggf. blockierte Isocyanatgruppen pro Molekül enthält und

(b) die so erhaltene Dispersion anschließend so hoch erhitzt wird, daß die Komponenten (A) und (B) zu vernetzten Polymermikroteilchen umgesetzt werden.

Die durch die Erfindung erreichten Vorteile sind im wesentlichen darin zu sehen, daß die erfindungsgemäß eingesetzten vernetzten Polymermikroteilchen mit einfachen Mitteln auf die speziellen Anforderungen der wäßrigen Basisbeschichtungszusammensetzungen eingestellt werden können und daß bei der Inkorporation in wäßrige Basisbeschichtungszusammensetzungen, insbesondere in solche, die als Bindemittel ein Gemisch aus einem Melaminharz und einem Polyesterharz enthalten, keine Unverträglichkeitserscheinungen auftreten. Durch die Verwendung von Xanthan als Verdickungsmittel werden überraschenderweise weder Feuchtigkeitsempfindlichkeit noch Haftungseigenschaften noch Metalleffekt der erhaltenen Filme negativ beeinflußt. Die Verwendung von Xanthan erlaubt vielmehr die Applikation von Basislacken mit sehr geringem Festkörper (10 bis 20 Gew.-%), was sich positiv auf den Metalleffekt der erhaltenen Beschichtungen auswirkt. Nicht zuletzt treten bei der Inkorporation von Xanthan in wäßrige Basisbeschichtungszusammensetzungen, insbesondere in solche, die als Bindemittel ein Gemisch aus einem Melaminharz und einem Polyesterharz enthalten, keine Unverträglichkeitserscheinungen auf.

Es war überraschend und in keiner Weise vorhersehbar, daß unter der sehr großen Anzahl verschiedener Verdickungsmittel für wäßrige Lacksysteme ausgerechnet Xanthan die oben dargelegten positiven Wirkungen zeigt.

Der erste Schritt des erfindungsgemäßen Verfahrens besteht in der Applikation einer pseudoplastischen und/oder thixotropen, wasserverdünnbaren Basisbeschichtungszusammensetzung.

Im folgenden sollen die einzelnen Komponenten der erfindungsgemäß eingesetzten Basisbeschichtungszusammensetzungen näher erläutert werden.

## Flüssiges Verdünnungsmittel

Die erfindungsgemäß eingesetzten Basisbeschichtungszusammensetzungen enthalten als flüssiges Verdünnungsmittel Wasser, das ggf. auch noch organische Lösungsmittel enthalten kann. Der Anteil an organischen Lösungsmitteln wird so gering wie möglich gehalten.

Als Beispiele für Lösungsmittel, die im Wasser vorhanden sein können, seien heterocyklische, aliphatische oder aromatische Kohlenwasserstoffe, ein- oder mehrwertige Alkohole, Ether, Glykolether, Ester, Amide und Ketone, wie z.B. N-Methylpyrrolidon, Dimethylformamid, Toluol, Xylol, Butanol, Ethyl- und Butylglykol sowie deren Acetate, Butyldiglykol, Diethylenglykoldimethylether, Cyclohexanon, Methylethylketon, Aceton, Isophoron oder Mischungen davon genannt.

## Wasserverdünnbares Bindemittel

Die erfindungsgemäß eingesetzten Basisbeschichtungszusammensetzungen können im Prinzip alle für den in Rede stehenden Zweck geeigneten wasserverdünnbaren Bindemittel und Mischungen aus diesen Bindemitteln enthalten. (Unter "wasserverdünnbaren Bindemitteln" werden alle Bindemittelbestandteile exclusive der vernetzten Polymermikroteilchen verstanden. Der Bindemittelfestkörper dagegen bezieht sich auf die

Summe aus wasserverdünnbaren Bindemitteln und vernetzten Polymermikroteilchen.)

Als Beispiele für einsetzbare wasserverdünnbare Bindemittel werden wasserverdünnbare Melaminharze, wasserverdünnbare Polyesterharze, wasserverdünnbare Polyacrylatharze, wasserverdünnbare Polyether und wasserverdünnbare Polyurethanharze genannt.

Wasserverdünnbare Melaminharze sind an sich bekannt und werden in größerem Umfang eingesetzt. Es handelt sich hierbei i.a. um veretherte Melamin-Formaldehyd-Kondensationsprodukte. Ihre Wasserlöslichkeit hängt — abgesehen vom Kondensationsgrad, der möglichst niedrig sein soll, — von der Veretherungskomponente ab, wobei nur die niedrigsten Glieder der Alkanol- bzw. Ethylenglykolmonoetherreihe wasserlösliche Kondensate ergeben. Die größte Bedeutung haben methanolveretherte Melaminharze. Bei Verwendung von Lösungsvermittlern können auch butanolveretherte Melaminharze in wäßriger Phase dispergiert werden.

Es besteht auch die Möglichkeit, Carboxylgruppen in das Kondensat einzufügen. Umetherungsprodukte hochveretherter Formaldehydkondensate mit Oxycarbonsäuren sind über ihre Carboxylgruppe nach Neutralisation wasserlöslich und können in den erfindungsgemäß eingesetzten Basisbeschichtungszusammensetzungen enthalten sein.

Anstelle der beschriebenen Melaminharze können auch andere wasserlösliche oder wasserdispergierbare Aminoharze wie z.B. Harnstoffharze eingesetzt werden.

Als wasserverdünnbare Polyesterharze werden vorzugsweise Hydroxylgruppen tragende Polyesterharze eingesetzt. Die erfindungsgemäß eingesetzten Polyesterharze enthalten als solubilisierende Gruppen vorzugsweise Carboxylatgruppen.

Wasserverdünnbare Polyesterharze der oben beschriebenen Art sind an sich bekannt und können durch Umsetzung von mehrwertigen Polyolen mit Polycarbonsäuren bzw. Polycarbonsäureanhydriden hergestellt werden.

Bevorzugt werden Polyesterharze mit einer mittleren Funktionalität pro Molekül von 2,5 bis 10 und mit einem mittleren Kondensationsgrad pro Molekül von 10 bis 25 eingesetzt. Der Kondensationsgrad gibt die Summe der Monomerbausteine in der Kette des Polymermoleküls an.

Die eingesetzten Polyesterharze weisen bevorzugt eine Säurezahl von höchstens 30 und eine Hydroxylzahl von höchstens 150 auf.

Für die Synthese der Polyesterharze bevorzugte Säurekomponenten sind aliphatische, cycloaliphatische gesättigte oder ungesättigte und/oder aromatische mehrbasische Carbonsäuren, vorzugsweise Di-, Tri- und Tetracarbonsäuren, mit 2 bis 14, vorzugsweise 4 bis 12 C-Atomen pro Molekül oder deren veresterungsfähige Derivate (z.B. Anhydride oder Ester), z.B. Phthalsäureanhydrid, Isophthalsäure, Terephthalsäure, Tetrahydro- und Hexahydrophthalsäureanhydrid, Endomethylentetrahydrophthalsäure, Bernsteinsäure, Glutarsäure, Sebacinsäure, Azelainsäure, Trimellithsäure und Trimellithsäureanhydrid, Pyromellithsäureanhydrid, Fumarsäure und Maleinsäure. Phthalsäureanhydrid ist die gebräuchlichste Säurekomponente. Die Polyesterharze sollen nicht mehr als 20 Mol-% bezogen auf die einkondensierten Polycarbonsäurereste, Fumar- und Maleinsäurereste enthalten.

Für die Synthese der Polyester bevorzugte Polyole sind aliphatische, cycloaliphatische und/oder araliphatische Alkohole mit 1 bis 15, vorzugsweise 2 bis 6 C-Atomen, und 1 bis 6, vorzugsweise 1 bis 4, an nicht-aromatische C-Atome gebundene OH-Gruppen pro Molekül, z.B. Glykole wie Ethylenglykol, Propandiol-1,2 und -1,3, Butandiol-1,2,-1,3 und -1,4, 2-Ethylpropandiol-1,3, 2-Ethylhexandiol-1,3, Neopentylglykol, 2,2-Trimethylpentandiol-1,3, Hexandiol-1,6, Cyclohexandiol-1,2 und -1,4, 1,2- und 1,4-Bis-(hydroxy-methyl-)cyclohexan, Adipinsäure-bis-(ethylenglykolester) ; Etheralkohole wie Di- und Triethylenglykol, Dipropylenglykol ; Dimethylolpropionsäure, oxalkylierte Bisphenole mit zwei $C_2$-$C_3$-Oxalkylgruppen pro Melekül, perhydrierte Bisphenole; Butantriol-1,2,4, Hexantriol-1,2,6, Trimethylolethan, Trimethylolpropan, Trimethylolhexan, Glycerin, Pentaerythrit, Dipentaerythrit, Mannit und Sorbit ; kettenabbrechende einwertige Alkohole mit 1 bis 8 Kohlenstoffatomen wie Propanol, Butanol, Cyclohexanol und Benzylalkohol, Hydroxypivalinsäure. Die gebräuchlichsten Alkohole sind Glycerin, Trimethylolpropan, Neopentylglykol und Pentaerythrit.

Die erfindungsgemäß einsetzbaren Polyesterharze können auch mit Monocarbonsäure und Monoalkoholen modifiziert sein.

Als Beispiele für Monocarbonsäuren werden gesättigte oder ungesättigte Fettsäuren, Benzoesäure, p-tert.-Butylbenzoesäure, Hexahydrobenzoesäure und Abietinsäure genannt.

Als Beispiele für Monoalkohole werden Methanol, Propanol, Cyclohexanol, 2-Ethylhexanol und Benzylalkohol genannt.

Es ist auch möglich, bis zu 25% der Esterbindungen durch Urethanbindungen zu ersetzen.

Bevorzugte Polyacrylatharze erhält man durch Copolymerisation von Vinyl- bzw. Vinylidenmonomeren, wie z.B. Styrol, α-Methylstyrol, o- bzw. p-Chlorstyrol, o-, m- oder p-Methylstyrol, p-tert.-Butylstyrol, (Meth-)Acrylsäure, (Meth-)Acrylnitril, Acryl- und Methacrylsäurealkylester mit 1 bis 8 C-Atomen in der Alkoholkomponente, beispielsweise Ethylacrylat, Methylacrylat, n- bzw. iso-Propylacrylat, n-Butylacrylat, 2-Ethylhexylacrylat, 2-Ethylhexylmethacrylat, Isooctylacrylat, tert.-Butylacrylat, Methylmethacrylat, Ethylmethacrylat, n- bzw. iso-Propylmethacrylat, Butylmethacrylat, Isooctylmethacrylat und ggf. Mischungen derselben; Hydroxyalkyl(meth)acrylate mit 2 bis 4 C-Atomen in der Alkylgruppe, z.B 2-Hydroxyethyl(Meth-)acrylat, 2-Hydroxypropyl(meth-)acrylat, 4-Hydroxybutyl(meth-)acrylat; Trimethylolpropanmono(meth-)acrylat, Pentaerythritmono(meth-)acrylat und deren Ester mit Fettsäuren, Diester der Fumarsäure, Itaconsäure, Maleinsäure mit 4 bis 8 Kohlenstoffatomen in der Alkoholkomponente; Acrylnitril. (Meth)acrylsäureamid, Vinylester von Alkanmonocarbonsäuren mit 2 bis 5 Kohlenstoffatomen wie Vinylacetat oder Vinylpropionat oder Mischungen der genannten Monomeren, N-Methoxymethyl(meth)acrylsäureamid.

Bevorzugte Monomere sind Styrol und (Meth)Acrylsäurealkylester mit 1 bis 8 C-Atomen in der Alkoholkomponente, das Veresterungsprodukt aus Fettsäure und Hydroxyalkylacrylaten und deren Mischungen.

Als Beispiele für wasserverdünnbare Polyether werden lineare oder verzweigte Poly(oxypropylen)glykole mit einem mittleren Molekulargewicht von 400 bis 1000, bevorzugt 600 bis 900, genannt.

Bevorzugt eingesetzte wasserverdünnbare Polyurethanharze sind die in der DE-OS-3545618 und US-PS-4,423,179 offenbarten Polyurethanharze.

Ganz besonders bevorzugt werden Basisbeschichtungszusammensetzungen eingesetzt, die als wasserverdünnbares Bindemittel ein Gemisch aus einem wasserverdünnbaren Melaminharz und einem wasserverdünnbaren Polyesterharz enthalten.

Besonders bevorzugte Basisbeschichtungszusammensetzungen werden erhalten, wenn der Anteil des Melaminharzes, bezogen auf den Anteil der erfindungsgemäß eingesetzten vernetzten Polymermikroteilchen, 1 bis 80 Gew.-%, bevorzugt 30 bis 70 Gew.-%, beträgt und wenn das Gewichtsverhältnis Melaminharz zu Polyesterharz 2 : 1 bis 1 : 4 beträgt.

Die erfindungsgemäß eingesetzten Basisbeschichtungszusammensetzungen können auch blockierte Polyisocyanate als Vernetzungsmittel enthalten.

Die in dem erfindungsgemäßen Verfahren eingesetzten Basisbeschichtungszusammensetzungen enthalten bevorzugt 2 bis 15 Gew.-%, besonders bevorzugt 5 bis 13 Gew.-%, wasserverdünnbare Bindemittelbestandteile. (Unter wasserverdünnbaren Bindemittelbestandteilen werden alle Bindemittelbestandteile ausgenommen die erfindungsgemäß eingesetzten vernetzten Polymermikroteilchen verstanden.)

## Vernetzte Polymermikroteilchen

Die in dem erfindungsgemäßen Verfahren verwendeten Basisbeschichtungszusammensetzungen enthalten vernetzte Polymermikroteilchen, die erhaltlich sind, indem

(a) ein Gemisch aus einer Komponente (A) und einer Komponente (B) in einem wäßrigen Medium dispergiert wird, wobei

— die Komponente (A) aus einem oder mehreren mindestens zwei Hydroxylgruppen enthaltenden Polyesterpolyol(en) und

— die Komponente (B) aus einer oder mehreren ggf. blockierten Polyisocyanatverbindung(en) besteht und wobei die Komponente (A) und/oder (B) über eine zur Bildung einer stabilen Dispersion ausreichende Anzahl ionischer Gruppen verfügt und wenigstens ein Teil der Komponente (A) und/oder (B) mehr als zwei Hydroxyl- bzw. ggf. blockierte Isocyanatgruppen pro Molekül enthält und

(b) die so erhaltene Dispersion anschließend so hoch erhitzt wird, daß die Komponenten (A) und (B) zu vernetzten Polymermikroteilchen umgesetzt werden.

Die erfindungsgemäß eingesetzten Polymermikroteilchen haben vorzugsweise einen Durchmesser, der unter 1 µm, besonders bevorzugt zwischen 0,05 bis 0,2 µm, liegt.

Die Teilchengröße der vernetzten Polymermikroteilchen kann mit einfachen Mitteln (z.B. über die Menge der in der Ausgangskomponente (A) bzw. (B) enthaltenen ionischen Gruppen) beeinflußt werden.

Während bei Polymermikroteilchen auf Basis von Vinylmonomeren im wesentlichen immer nur eine Modifizierung der Polymerseitenketten möglich ist, kann bei den erfindungsgemäß eingesetzten Polymermikroteilchen die Netzwerkstruktur der Teilchen durch gezielten Einbau bestimmter Kettensegmente beeinflußt werden. Die erfindungsgemäß eingesetzten Polymermikroteilchen können mit einfachen Mitteln optimal auf die in den Basisbeschichtungszusammensetzungen enthaltenen Komponenten, insbesondere auf die Bindemittelkomponenten, abgestimmt werden. Dieser Vorteil kommt vor allem bei Basisbeschichtungszusammensetzungen zum tragen, die Melaminharze und Polyester als Bindemittelbestandteile enthalten. Es können aber auch mit anderen Bindemittelsystemen Ergebnisse erzielt werden, die oft besser sind als die, die mit Mikroteilchen auf Basis von Acrylpolymeren als einzige Mikroteilchenkomponente erzielbar sind.

In manchen Fällen hat es sich als vorteilhaft erwiesen, den erfindungsgemäßen Beschichtungszusammensetzungen neben den oben beschriebenen Polymermikroteilchen auch noch Mikroteilchen aus Acrylpolymeren zuzumischen.

Der erste Schritt zur Herstellung der erfindungsgemäß eingesetzten Polymermikroteilchen besteht in der Bereitstellung einer Mischung aus den Komponenten (A) und (B), wobei darauf zu achten ist, daß die Komponente (A) und/oder die Komponente (B) über eine zur Bildung einer stabilen Dispersion ausreichende Anzahl ionischer Gruppen, bevorzugt Carboxylatgruppen, verfügt und das wenigstens ein Teil der Komponente (A) und/oder (B) mehr als zwei Hydroxyl- bzw. Isocyanatgruppen pro Molekül enthält.

Mit dem Begriff "stabile Dispersion" sind Dispersionen gemeint, in denen die dispergierten Teilchen erst nach der Applikation und der Abgabe des Dispergiermediums in größerem Umfang koagulieren.

In manchen Fällen kann es nützlich sein, außer ionischen Gruppen weitere stabilisierende Gruppen, wie z.B. Polyoxyalkylengruppen, in die Komponente (A) und/oder (B) zu inkorporieren.

Es kann sowohl anionisch als auch kationisch stabilisiert werden, wobei die anionische Stabilisierung, bevorzugt über Carboxylatgruppen, bevorzugt ist. Die Ermittlung der für die Bildung einer stabilen Dispersion optimalen Konzentration an ionischen Gruppen in der Komponente (A) und/oder (B) ist vom Durchschnittsfachmann mit Hilfe einfacher Routineuntersuchungen durchführbar. Die zur Bildung einer stabilen Dispersion in der Regel notwendige Konzentration an ionischen Gruppen liegt zwischen 0,01 bis 2 Milliäquivalenten pro Gramm der Komponente (A) und/oder (B).

Die Neutralisierung von zur Salzbildung befähigten Gruppen mit Hilfe von Basen bzw. Säuren erfolgt vorzugsweise kurz vor der Dispergierung bzw. während der Dispergierung des aus den Komponenten (A) und (B) bestehenden Gemisches in dem wäßrigen Dispergiermedium.

Als zur Salzbildung befähigte Gruppen kommen vor allem Carboxyl- und Sulfonsäuregruppen in Betracht. Diese Gruppen werden bevorzugt mit einem tertiären Amin neutralisiert.

Der Gehalt an ionischen Gruppen bzw. der Neutralisationsgrad der zur Salzbildung geeigneten Gruppierungen ist ein wichtiger Parameter, über den die Größe der entstehenden vernetzten Polymermikroteilchen gesteuert werden kann.

Bei der Bereitstellung des aus den Komponenten (A) und (B) zusammensetzten Gemisches ist darauf zu achten, daß es vor der Dispergierung der Mischung in dem wäßrigen Dispergiermedium zu keinerlei Vorvernetzungsreaktionen zwischen den Komponenten (A) und (B) kommt.

Die Komponente (A) besteht aus einem oder mehreren mindestens zwei Hydroxylgruppen enthaltenden Polyesterpolyol.

Beispiele geeigneter Polyesterpolyole sind insbesondere die in der Polyurethanchemie an sich bekannten Umsetzungsprodukte von mehrwertigen Polyolen mit Polycarbonsäuren bzw. Polycarbonsäureanhydriden.

Zur Herstellung der Polyesterpolyole geeignete Polyole sind z.B. Ethylenglykol, Propandiol-1,2 und -1,3, Butandiol -1,3 und -1,4, die isomeren Pentandiole, Hexandiole oder Oktandiole, wie z.B. 2-Ethylhexandiol-1,3, Trimethylolpropan, Glycerin, Bishydroxymethylcyclohexan, Erytrith, Mesoerytrith, Arabit, Adonit, Xylit, Manit, Sorbit, Dulcit, Hexantriol, (Poly-)Pentaerytrithol usw.

Die zur Herstellung der Polyesterpolyole geeigneten Polycarbonsäuren bestehen in erster Linie aus niedermolekularen Polycarbonsäuren oder ihren Anhydriden mit 2 bis 18 Kohlenstoffatomen im Molekül.

Di- und Tricarbonsäuren werden bevorzugt eingesetzt.

Geeignete Säuren sind beispielsweise Oxalsäure, Bernsteinsäure, Fumarsäure, Phthalsäure, Isophthalsäure, Terephthalsäure, Tetrahydrophthalsäure, Hexahydrophthalsäure, Adipinsäure, Acelainsäure, Sebacinsäure, Maleinsäure, Glutarsäure, Hexachlorhepthandicarbonsäure, Tetrachlorphthalsäure und Trimellithsäure. Anstelle dieser Sauren können auch ihre Anhydride, soweit diese existieren, eingesetzt werden.

Es können auch Polyesterpolyole als Komponente (A) eingesetzt werden, die durch Polymerisation von Laktonen hergestellt worden sind.

Besonders gute Resultate werden mit Polyesterpolyolen erzielt, deren Moleküle im Durchschnitt je eine Carboxylatgruppe und mindestens zwei, bevorzugt mehr als zwei, Hydroxylgruppen tragen.

Vorzugsweise werden (B)-Komponenten eingesetzt, die frei von ionischen Gruppen sind.

Die (A)-Komponente wird vorzugsweise so ausgewählt, daß sie für sich allein in dem wäßrigen Medium stabil dispergiert werden kann. Die Zusammenhänge zwischen dem Aufbau von Polyesterpolyolen (Säurezahl, Molekulargewicht...) und deren Dispergierverhalten sind dem Durchschnittsfachmann gut bekannt, und er kann mit Hilfe einiger weniger orientierender Vorversuche die zur Lösung der jeweiligen Problemstellung optimale Polyesterpolyolkomponente auswählen.

Es ist auch möglich, den als (A)-Komponente eingesetzten Polyesterpolyolen noch weitere Verbindungen zuzusetzen, die gegenüber Isocyanatgruppen reaktive Gruppen enthalten. Dabei ist sorgfältig darauf zu achten, daß die aus den Komponenten gebildete Mischung in dem wäßrigen Medium stabil dispergierbar bleibt und daß die aus dieser Dispersion gebildeten vernetzten Polymermikroteilchen die gewünschte Größe aufweisen.

Als Beispiele für Verbindungen, die zu den die Komponente (A) bildenden Polyesterpolyolen zugesetzt werden können, seien die in der Polyurethanchemie an sich bekannten Polyetherpolyole genannt.

Als Komponente (B) werden Polyisocyanatverbindungen eingesetzt, deren Isocyanatgruppen ggf. zumindest teilweise in blockierter Form vorliegen.

Als Beispiele seien genannt : Trimethylendiisocyanat, Tetramethylendiisocyanat, Pentamethylendiisocyanat, Hexamethylendiisocyanat, Ethylethylendiisocyanat, 2,3-Dimethylethylendiisocyanat, 1-Methyltrimethylendiisocyanat, 1,3-Cyclopentylendiisocyanat, 1,4-Cyclohexylendiisocyanat, 1,2-Cyclohexylendiisocyanat, 1,3-Phenylendiisocyanat, 1,4-Phenylendiisocyanat, 2,4-Toluylendiisocyanat, 2,6-Toluylendiisocyanat, 4,4-Biphenylendiisocyanat, 1,5-Naphthylendiisocyanat, 1,4-Naphthylendiisocyanat, 1-Isocyanatomethyl-5-isocyanato-1,3,3-trimethylcyclohexan usw.

Es ist auch möglich, isocyanatgruppenhaltige Präpolymere als Polyisocyanatkomponenten einzusetzen.

Als Blockierungsmittel können im Prinzip alle aus der Isocyanatchemie bekannten Blockierungsmittel verwendet werden.

Ganz besonders bevorzugte Blockierungsmittel sind jedoch die Diester der Malonsäure mit $C_1$-$C_8$-Alkanolen wie Methanol, Ethanol, N-Propanol, N-Butanol, Isobutanol, N-Hexanol, N-Oktanol oder Isooktanol, mit cycloaliphatischen Alkoholen, wie Cyclopentanol oder Cyclohexanol, und auch mit araliphatischen Alkoholen, wie Benzylalkohol oder 2-Phenylethanol.

Unter den Malonsäurediestern wird der Malonsäurediethylester als ganz besonders bevorzugtes Blockierungsmittel verwendet.

Es werden bevorzugt Polyisocyanatkomponenten eingesetzt, deren Isocyanatgruppen an (cyclo-) aliphatische Reste gebunden sind. Polyisocyanatverbindungen, die an aromatische Gruppen gebundene Isocyanatgruppen enthalten, sind aufgrund ihrer hohen Reaktivität gegenüber Wasser nur in Ausnahmefällen (z.B. als Teilkomponente der Komponente (B)) einsetzbar.

Durch das Molverhältnis der Komponenten (A) und (B) und die Anzahl der in den Komponenten (A) und (B) enthaltenen gegenüber Isocyanatgruppen reaktiven Gruppen bzw. ggf. blockierten Isocyanatgruppen sowie die zur Herstellung der vernetzten Polymermikroteilchen gewählten Reaktionsbedingungen kann die Vernetzungsdichte der entstehenden Polymermikroteilchen beeinflußt werden.

Die Vernetzungsdichte wiederum korreliert mit dem Quellverhalten der Polymermikroteilchen.

Das Quellverhalten der Polymermikroteilchen kann auch über die chemische Natur der Komponenten (A) bzw. (B) gesteuert werden (Einbau von mehr oder weniger hydrophilen Molekülsegmenten ; Einbau von mehr oder weniger starren Molekülteilen).

Besonders bevorzugte Gemische aus den Komponenten (A) und (B) bestehen aus Polyesterpolyolen, deren Moleküle im Durchschnitt je eine Carboxylgruppe und mindestens 3 Hydroxylgruppen tragen, und Triisocyanatverbindungen, deren Isocyanatgruppen an (cyclo-)aliphatische Reste gebunden sind und ggf. zumindest teilweise mit Malonsäurediester, bevorzugt Malonsäurediethylester, blockiert sind.

Das aus den Komponenten (A) und (B) bestehende Gemisch kann in Substanz in dem wäßrigen Dispergiermedium dispergiert werden.

Es ist jedoch vorteilhafter, die Komponenten (A) und (B) in einem mit Wasser mischbaren, gegenüber Isocyanatgruppen inerten, vorzugsweise unter 100°C siedenden organischen Lösungsmittel zu lösen bzw. zu dispergieren und dann diese Losung oder Dispersion in dem wäßrigen Dispergiermedium zu dispergieren. Als Lösungs- bzw. Dispergiermittel für das aus den Komponenten (A) und (B) bestehende Gemisch sind prinzipiell alle mit Wasser mischbaren und gegenüber Isocyanatgruppen inerten organischen Lösungsmittel verwendbar.

Vorteilhafterweise werden organische Lösungsmittel mit einem Siedepunkt unter 100°C verwendet. Besonders gute Resultate können mit Aceton und Methylethylketon erhalten werden.

Das wäßrige Dispergiermedium, in dem die Mischung aus (A) und (B) dispergiert wird, besteht aus Wasser, das auch noch organische Lösemittel enthalten kann.

Nach Überführung des aus (A) und (B) bestehenden Gemisches in das wäßrige Dispergiermedium wird eine stabile wäßrige Dispersion erhalten, die aus Teilchen besteht, deren Größe durch gezielte Variation der oben diskutierten Parameter beeinflußbar ist. Anschließend wird die erhaltene Dispersion so hoch erhitzt (im allgemeinen auf 60 bis 95°C), daß die Komponenten (A) und (B) zu vernetzten Polymermikroteilchen umgesetzt werden.

Das zur Dispergierung bzw. Lösung des aus den Komponenten (A) und (B) bestehenden Gemisches verwendete organische Lösungsmittel kann vor der Umsetzung der Komponenten (A) und (B) bei einer Temperatur, die unter der zur Bildung von vernetzten Polymermikroteilchen notwendigen Reaktionstemperatur liegt, ggf. im Vakuum abdestilliert werden ; es ist aber auch möglich, das organische Lösemittel im Laufe der Vernetzungsreaktion abzudestillieren.

Die erfindungsgemäß eingesetzten Polymermikroteilchen werden ganz besonders bevorzugt hergestellt, indem

(1) ein Gemisch aus den Komponenten (A) und (B) in einem wäßrigen Medium dispergiert wird, wobei

— die Komponente (A) aus Polyesterpolyolen, deren Moleküle im Durchschnitt je eine Carboxylatgruppe und mindestens zwei, bevorzugt mehr als zwei Hydroxylgruppen tragen und

— die Komponente (B) aus Polyisocyanatverbindungen, die bevorzugt mehr als zwei an (cyclo-)aliphatische Reste gebundene Isocyanatgruppen, die ggf. blockiert sein können, enthalten,

besteht und wobei das Gemisch aus den Komponenten (A) und (B) in einem mit Wasser mischbaren, unter 100°C siedenden, gegenüber Isocyanatgruppen inerten organischen Lösungsmittel, bevorzugt Aceton und/oder Methylethylketon, gelöst oder dispergiert wird und

(2) die so erhaltene Dispersion anschließend so hoch erhitzt wird, daß die Komponenten (A) und (B) zu vernetzten Polymermikroteilchen umgesetzt werden.

Die so erhaltenen vernetzten Polymermikroteilchen enthaltenden wäßrigen Dispersionen können problemlos in die erfindungsgemäß verwendeten wäßrigen Basisbeschichtungszusammensetzungen inkorporiert werden.

Die erfindungsgemäß verwendeten Basisbeschichtungszusammensetzungen enthalten vorzugsweise 2 bis 15 Gew.-%, besonders bevorzugt 5 bis 13 Gew.-%, vernetzte Polymermikroteilchen der oben beschriebenen Art. Bezogen auf den Bindemittelfestkörper beträgt der Anteil an vernetzten Polymermikroteilchen 5 bis 80 Gew.-%, bevorzugt 30 bis 70 Gew.-%, besonders bevorzugt 40 bis 60 Gew.-%.

Unter "Bindemittelfestkörper" wird der Gesamtanteil an wasserverdünnbarem Bindemittel und vernetzten Polymermikroteilchen verstanden. Mit anderen Worten : Der "Bindemittelfestkörper" wird durch Addition des Anteils an wasserverdünnbarem Bindemittel und des Anteils an vernetzten Polymermikroteilchen berechnet.

Der Bindemittelfestkörper der erfindungsgemäß eingesetzten Basisbeschichtungszusammensetzungen beträgt bevorzugt 5 bis 30 Gew.-%, besonders bevorzugt 10 bis 25 Gew.-%.

Pigmente

Die erfindungsgemäß eingesetzten Basisbeschichtungszusammensetzungen können alle für das Basecoat/Clearcoat-Verfahren geeigneten Pigmente enthalten. Als Beispiel seien Titandioxyd, Graphit, Ruß, Phthalocyaninblau, Chromoxyd, Perylentetracarbonsäureimide udgl. genannt.

Die erfindungsgemäß eingesetzten Basisbeschichtungszusammensetzungen enthalten ganz besonders bevorzugt Metallplättchenpigmente, besonders bevorzugt Aluminiumplättchen, als Pigmente. Die Metallplättchenpigmente können auch zusammen mit Farbpigmenten eingesetzt werden. In diesem Fall wird Art und Menge der Farbpigmente so gewählt, daß der erwünschte Metalleffekt nicht unterdrückt wird.

Die erfindungsgemäß eingesetzten Basisbeschichtungszusammensetzungen können anstelle oder in Kombination mit Metallplättchenpigmenten auch andere Effektpigmente wie z.B. mit Metalloxiden beschichtete Glimmerplättchen (sog. Mica) enthalten.

Der Metallplättchenpigmentgehalt der erfindungsgemäß eingesetzten Basisbeschichtungszusammensetzung beträgt — bezogen auf den Bindemittelfestkörper — bis zu 25 Gew.-%, vorzugsweise 12 bis 18 Gew.-%.

Verdickungsmittel

Die erfindungsgemäß eingesetzten Basisbeschichtungszusammensetzungen enthalten 0,1 bis 4,0 Gew.-%, bevorzugt 1.0 bis 2,0 Gew.-%, bezogen auf den Bindemittelfestkörper Xanthan (englisch : xanthan gum) als Verdickungsmittel.

Xanthan ist ein allgemein bekanntes Verdickungsmittel, das auch in wäßrigen Beschichtungszusammensetzungen, insbesondere Latexfarben, eingesetzt wird. Angesichts der großen Anzahl unterschiedlichster Verdickungsmittel war es überraschend und nicht vorhersehbar, daß ausgerechnet mit Xanthan die einleitend beschriebenen Probleme gelöst werden können.

Xanthan ist ein vom Bakterienstamm Xanthomonas campestris abgeschiedenes hochpolymeres Heteropolysaccharid (Molmasse etwa 2 Millionen) mit folgender Struktur :

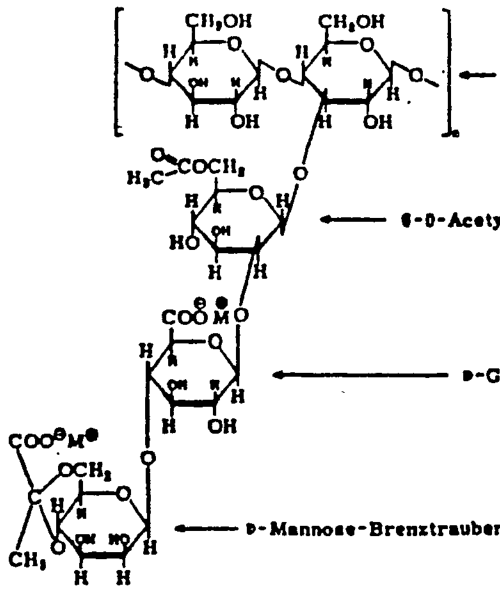

β-1,4-Glukan

6-O-Acetyl-D-mannose

D-Glucuronsäure

D-Mannose-Brenztraubensäure-acetal

Die erfindungsgemäßen Basisbeschichtungszusammensetzungen können auch weitere übliche Zusätze wie Füllstoffe, Weichmacher, Stabilisatoren, Netzmittel, Dispergierhilfsmittel, Verlaufsmittel, Entschäumer und Katalysatoren einzeln oder im Gemisch in den üblichen Mengen enthalten.

Nach Applikation der Basisbeschichtungszusammensetzungen wird nach einer kurzen Ablüftzeit ohne Einbrennschritt mit einer geeigneten transparenten Deckschichtzusammensetzung überlackiert. Es können konventionelle lösungsmittelhaltige Klarlacke, wasserverdünnbare Klarlacke oder Pulverklarlacke aufgebracht werden.

Schließlich wird die Basisschicht zusammen mit der Deckschicht eingebrannt.

Die Erfindung betrifft auch wasserverdünnbare Beschichtungszusammensetzungen, die zur Herstellung der Basisschicht von Zweischichtlackierungen des Basecoat/Clearcoat-Typs geeignet sind und die Wasser, ggf. organische Lösemittel, ein wasserverdünnbares Bindemittel, vernetzte Polymermikroteilchen mit einem Durchmesser von 0,01 bis 10 µm, Pigmentteilchen und ein Verdickungsmittel enthalten, dadurch gekennzeichnet, daß sie 0,1 bis 4,0 Gew.-%, bevorzugt 1,0 bis 2,0 Gew.-%, bezogen auf den Bindemittelfestkörper, Xanthan und 5 bis 80 Gew.-%, bevorzugt 30 bis 70 Gew.-%, besonders bevorzugt 40 bis 60 Gew.-%, bezogen auf den Bindemittelfestkörper, vernetzte Polymermikroteilchen enthält, wobei die vernetzten Polymermikroteilchen erhältlich sind, indem

(a) ein Gemisch aus einer Komponente (A) und einer Komponente (B) in einem wäßrigen Medium dispergiert wird, wobei

— die Komponente (A) aus einem oder mehreren mindestens zwei Hydroxylgruppen enthaltenden Polyesterpolyol(en) und

— die Komponente (B) aus einer oder mehreren ggf. blockierten Polyisocyanatverbindung(en)

besteht und wobei die Komponente (A) und/oder (B) über eine zur Bildung einer stabilen Dispersion ausreichende Anzahl ionischer Gruppen verfügt und wenigstens ein Teil der Komponente (A) und/oder (B) mehr als zwei Hydroxyl- bzw. ggf. blockierte Isocyanatgruppen pro Molekül enthält und

(b) die so erhaltene Dispersion anschließend so hoch erhitzt wird, daß die Komponenten (A) und (B) zu vernetzten Polymermikroteilchen umgesetzt werden.

Zur näheren Beschreibung der erfindungsgemäßen Beschichtungszusammensetzungen wird auf die Seiten 6 bis 22 dieser Beschreibung verwiesen.

Als zu beschichtende Substrate kommen vor allem vorbehandelte Metallsubstrate in Frage ; es können aber auch nichtvorbehandelte Metalle und beliebige andere Substrate, wie z.B. Holz, Kunststoffe usw., unter Verwendung der erfindungsgemäßen Basisbeschichtungszusammensetzungen mit einer mehrschichtigen, schützenden und/oder dekorativen Beschichtung überzogen werden.

Die Erfindung wird in den folgenden Beispielen näher erläutert. Alle Angaben über Teile und Prozentsätze sind Gewichtsangaben, falls nicht ausdrücklich etwas anderes festgestellt wird.

## 1. Herstellung eines wasserverdünnbaren Bindemittels

1.1 In einem Reaktor, der mit einem Rührer, einem Thermometer und einer Füllkörperkolonne ausgestattet

ist, werden 832 Teile Neopentylglykol eingewogen und zum Schmelzen gebracht. Dann werden 664 Teile Isophthalsäure zugegeben, und das Reaktionsgemisch wird unter Rühren so aufgeheizt, daß die Kolonnenkopftemperatur 100°C und die Reaktionstemperatur 220°C nicht übersteigt. Nach Erreichen einer Säurezahl von 8,5 wird auf 180°C abgekühlt, und es werden 384 Teile Trimellithsäureanhydrid zugegeben. Danach wird weiter verestert, bis eine Säurezahl von 39 erreicht wird. Schließlich wird mit 722 Teilen Butylglykol verdünnt. Es wird eine 70%ige Polyesterharzlösung, die nach Neutralisation mit einem Amin mit Wasser verdünnt werden kann, erhalten.

2. Herstellung einer wäßrigen Dispersion der erfindungsgemäß eingesetzten vernetzten Polymermikroteilchen

2.1 Herstellung eines Polyesterpolyols

381 Teile Hexandiol-1,6 und 179 Teile Isophthalsäure werden in einen 4-Hals-Kolben, der mit Rührer, Thermometer, Gaseinleitungsrohr und einer Füllkörperkolonne ausgerüstet ist, eingewogen und unter Rühren und Einleiten eines schwachen Stickstoffstroms so aufgeheizt, daß die Kolonnenkopftemperatur 100°C und die Reaktionstemperatur 220°C nicht überschreitet. Wenn die Säurezahl unter 10 gefallen ist, wird auf 150°C abgekühlt, und es werden 206 Teile Trimellithsäureanhydrid zugegeben. Danach wird wieder so aufgeheizt, daß die Kolonnenkopftemperatur 100°C und die Reaktionstemperatur 170°C nicht überschreitet. Sobald eine Säurezahl von 45 erreicht worden ist, wird abgekühlt und mit 233 Teilen Methylethylketon verdünnt. Die erhaltene Lösung hat einen Festkörpergehalt von 75 Gew.-%.

2.2 Herstellung eines verkappten Polyisocyanats

In einem Rundkolben, der mit Rückflußkühler, Rührer und Thermometer ausgestattet ist, werden 1998 Teile (9 Mol) Isophorondiisocyanat in 1200 Teilen wasserfreiem Methylethylketon gelöst und mit 3 Teilen Dibutylzinndilaurat versetzt. Nach Aufheizen auf 70°C werden 150 Teile Trimethylolpropan zugegeben und die Reaktionsmischung 1 Stunde bei 70°C gehalten. Danach werden portionsweise weitere 252 Teile Trimethylolpropan zugegeben. Zu dem so erhaltenen Zwischenprodukt (NCO-Gehalt : 9,6%) werden 922 Teile Malonsäurediethylester zusammen mit 7,1 Teilen Natriumphenolat zugegeben. Die Reaktionsmischung wird 4 Stunden bei 70°C gehalten. Der NCO-Gehalt des Endprodukts beträgt 1,97%. Nach Zugabe von 500 Teilen Methylethylketon wird eine 48%ige Lösung erhalten.

2.3 Hestellung einer Dispersion von vernetzten Polymermikroteilchen

In einem zylindrischen Doppelmantelglasreaktor, ausgerüstet mit Rührer, Thermometer, Rückflußkühler und Zulaufgefäß, werden 1558 Teile der nach obiger Vorschrift (vgl. 2.1) hergestellten Polyesterpolyollösung und 1208 Teile des nach obiger Vorschrift (vgl. 2.2) hergestellten verkappten Polyisocyanats eingewogen und mit 426 Teilen Methylethylketon verdünnt. Dann wird auf 50°C erwärmt, und nach etwa 1 Stunde wird unter Rühren eine Mischung aus 3385 Teilen deionisiertem Wasser und 56 Teilen Dimethylethanolamin zugegeben. Nach Abdestillieren des Methylethylketons im Vakuum bei etwa 50°C wird eine unvernetzte Teilchen enthaltende wäßrige Dispersion erhalten. Die Dispersion weist einen Festkörpergehalt von 35 Gew.-% auf. Zur Herstellung von vernetzten Polymermikroteilchen wird die so hergestellte Dispersion innerhalb 1 Stunde auf 90°C erhitzt. Etwa 2 Stunden nach Erreichen der Temperatur von 90°C beginnt die Viskosität zu steigen. Im Verlauf von weiteren 2 Stunden wird immer so viel Wasser zugegeben, wie für eine gute Durchmischung notwendig ist. Insgesamt werden 7285 Teile Wasser zugegeben, so daß der Festkörpergehalt der Dispersion auf 15 Gew.-% absinkt. Die so erhaltene Dispersion wird mit Hilfe einer 10%igen wäßrigen Lösung von Dimethylethanolamin auf einen pH-Wert von 7,3 eingestellt. Viskosität, gemessen im DIN-4-Becher : 25 Sekunden. Messungen mit einem Haake-Rotationsviskosimeter RV 100 zeigen, daß die Dispersion ein hohes Maß an Strukturviskosität (Pseudoplastizität) aufweist.

Die Dispersion kann durch Zugabe von großen Mengen Tetrahydrofuran, Dimethylformamid oder N-Methylpyrrolidon nicht in eine Lösung überführt werden. Somit liegen vernetzte Polymermikroteilchen vor.

3. Herstellung und Applikation einer erfindungsgemäßen Basisbeschichtungszusammensetzung

Nach allgemein bekannten Methoden wird eine Basisbeschichtungszusammensetzung mit folgender Zusammensetzung hergestellt :

| | |
|---|---|
| Polyesterharzlösung gemäß Vorschrift 1.1 | 4,0 |
| Polymermikroteilchendispersion gemäß Vorschrift 2.3 | 51,1 |
| Cymel 325[a)] | 5,0 |
| Butylglykol | 8,9 |
| Dimethylethanolamin (10%ig in Wasser) | 2,9 |
| Aluminiumpaste (65 % Aluminium) | 3,3 |
| Rhodopol 50 MD[b)] (2%ig in Wasser) | 10,8 |
| Wasser | 14,0 |
| | 100,0 |

a) methanolverethertes Melamin-Formaldehyd-Harz Handelsprodukt der Firma Dyno-Cyanamid

b) Xanthan (Molmasse ca. 2 $10^6$) Handelsprodukt der Firma Rhône-Poulenc

Der erhaltene Metallic-Basislack weist einen pH-Wert von 7,7 und eine im DIN-4-Becher nicht mehr meßbare Viskosität auf. Trotz der hohen Viskosität läßt sich der Basislack wegen des stark strukturviskosen (pseudoplastischen) Fließverhaltens z.B. durch pneumatische Zerstäubung problemlos applizieren.

Mit diesem Basislack wurden Zweischicht-Metalleffektlackierungen nach dem üblichen Naß-in-naß-Verfahren hergestellt. Diese Lackierungen zeigten einen ausgezeichneten Metalleffekt und einen sehr guten Klarlackstand.

Verglichen mit einem Basislack derselben Bindemittelbasis ohne Xanthan zeigt sich ein besserer Metalleffekt und ein stark vermindertes Ablaufverhalten an senkrechten Flächen.

**Patentansprüche**

1. Verfahren zur Herstellung eines mehrschichtigen schützenden und/oder dekorativen Überzuges auf einer Substratoberfläche, bei welchem

(1) als Basisbeschichtungszusammensetzung eine pseudoplastische und/oder thixotrope wasserverdünnbare Basisbeschichtungszusammensetzung aufgebracht wird, wobei diese Basisbeschichtungszusammensetzung Wasser, ggf. organische Lösemittel, ein wasserverdünnbares Bindemittel, vernetzte Polymermikroteilchen mit einem Durchmesser von 0,01 bis 10 µm, Pigmentteilchen und ein Verdickungsmittel enthält,

(2) aus der in Stufe (1) aufgebrachten Zusammensetzung ein Polymerfilm auf der Oberfläche gebildet wird,

(3) auf der so erhaltenen Basisschicht eine geeignete transparente Deckschichtzusammensetzung aufgebracht wird und anschließend

(4) die Basisschicht zusammen mit der Deckschicht eingebrannt wird, dadurch gekennzeichnet, daß die Basisbeschichtungszusammensetzung 0,1 bis 4,0 Gew.-%, bevorzugt 1,0 bis 2,0 Gew.-%, bezogen auf den Bindemittelfestkörper, Xanthan und 5 bis 80 Gew.-%, bevorzugt 30 bis 70 Gew.-%, besonders bevorzugt 40 bis 60 Gew.-%, bezogen auf den Bindemittelfestkörper, vernetzte Polymermikroteilchen enthält, wobei die vernetzten Polymermikroteilchen erhältlich sind, indem

(a) ein Gemisch aus einer Komponente (A) und einer Komponente (B) in einem wäßrigen Medium dispergiert wird, wobei

— die Komponente (A) aus einem oder mehreren mindestens zwei Hydroxylgruppen enthaltenden Polyesterpolyol(en) und

— die Komponente (B) aus einer oder mehreren ggf. blockierten Polyisocyanatverbindung(en) besteht und wobei die Komponente (A) und/oder (B) über eine zur Bildung einer stabilen Dispersion ausreichende Anzahl ionischer Gruppen verfügt und wenigstens ein Teil der Komponente (A) und/oder (B) mehr als zwei Hydroxyl- bzw. ggf. blockierte Isocyanatgruppen pro Molekül enthäl und

(b) die so erhaltene Dispersion anschließend so hoch erhitzt wird, daß die Komponenten (A) und (B) zu vernetzten Polymermikroteilchen umgesetzt werden.

2. Verfahren nach Anspruch 1, dadurch gekennzeichnet, daß die Basisbeschichtungszusammensetzung als wasserverdünnbares Bindemittel ein Gemisch aus einem wasserverdünnbaren Melaminharz und einem wasserverdünnbaren Polyesterharz enthält.

3. Verfahren nach einem der Ansprüche 1 oder 2, dadurch gekennzeichnet, daß die Basisbeschichtungszusammensetzung Metallplättchenpigmente enthält.

4. Wasserverdünnbare Beschichtungszusammensetzungen, die zur Herstellung der Basisschicht von Zweischichtlackierungen des base coat/clear coat-Typs geeignet sind und die Wasser, ggf. organische Lösemittel, ein wasserverdünnbares Bindemittel, vernetzte Polymermikroteilchen mit einem Durchmesser von 0,01 bis 10 µm, Pigmentteilchen und ein Verdickungsmittel enthalten, dadurch gekennzeichnet, daß sie 0,1 bis 4,0 Gew.-%, bevorzugt 1,0 bis 2,0 Gew.-%, bezogen auf den Bindemittelfestkörper, Xanthan und 5 bis 80 Gew.-%, bevorzugt 30 bis 70 Gew.-%, besonders bevorzugt 40 bis 60 Gew.-%, bezogen auf den Bindemittelfestkörper, vernetzte Polymermikroteilchen enthält, wobei die vernetzten Polymermikroteilchen erhältlich sind, indem

(a) ein Gemisch aus einer Komponente (A) und einer Komponente (B) in einem wäßrigen Medium dispergiert wird, wobei

— die Komponente (A) aus einem oder mehreren mindestens zwei Hydroxylgruppen enthaltenden Polyesterpolyol(en) und

— die Komponente (B) aus einer oder mehreren ggf. blockierten Polyisocyanatverbindung(en) besteht und wobei die Komponente (A) und/oder (B) über eine zur Bildung einer stabilen Dispersion ausreichende Anzahl ionischer Gruppen verfügt und wenigstens ein Teil der Komponente (A) und/oder (B) mehr als zwei Hydroxyl- bzw. ggf. blockierte Isocyanatgruppen pro Molekül enthält und

(b) die so erhaltene Dispersion anschließend so hoch erhitzt wird, daß die Komponenten (A) und (B) zu vernetzten Polymermikroteilchen umgesetzt werden.

5. Wasserverdünnbare Beschichtungszusammensetzungen nach Anspruch 4, dadurch gekennzeichnet, daß sie als wasserverdünnbares Bindemittel ein Gemisch aus einem wasserverdünnbaren Melaminharz und einem wasserverdünnbaren Polyesterharz enthält.

6. Wasserverdünnbare Beschichtungszusammensetzungen nach einem der Ansprüche 4 oder 5, dadurch gekennzeichnet, daß sie Metallplättchenpigmente enthalten.

## Claims

1. A process for the production of a multicoat protective and/or decorative coating on a substrate surface, wherein

(1) a pseudoplastic and/or thixotropic water-dilutable basecoat composition is applied as basecoat composition, this basecoat composition containing water, organic solvents if appropriate, a water-dilutable binder, crosslinked polymeric microparticles with a diameter of 0.01 to 10 µm, pigment particles and a thickener,

(2) a polymeric film is formed on the surface from the composition applied in stage (1),

(3) a suitable transparent topcoat composition is applied to the basecoat obtained in this manner, and subsequently

(4) the basecoat and topcoat are baked together,

wherein the basecoat composition contains 0.1 to 4.0% weight, preferably 1.0 to 2.0% by weight, based on the binder solids, of xanthan gum and 5 to 80% by weight, preferably 30 to 70% by weight, particularly preferably 40 to 60% by weight, based on the binder solids, of crosslinked polymeric microparticles, in which the crosslinked polymeric microparticles are obtainable

(a) by dispersing a mixture of a component (A) and a component (B) in an aqueous medium, wherein

— the component (A) consists of one or more polyester polyol(s) containing at least two hydroxyl groups and

— the component (B) consists of one or more optionally blocked polyisocyanate compound(s), the components
(A) and/or (B) possessing a sufficient number of ionic groups to form a stable dispersion and at least a part of the components (A) and/or (B) containing more than two hydroxyl or optionally blocked isocyanate groups per molecule, and
(b) by subsequently heating the resultant dispersion to a temperature high enough for the components (A) and (B) to react with the formation of crosslinked polymeric microparticles.

2. The process as claimed in claim 1, wherein the basecoat composition contains a mixture of a water-dilutable melamine resin and a water-dilutable polyester resin as water-dilutable binder.

3. The process as claimed in one of claims 1 or 2, wherein the basecoat composition contains metallic pigments.

4. Water-dilutable coating compositions which are suitable for the production of the basecoat of twocoat coatings of the basecoat/clearcoat type and which contain water, organic solvents if appropriate, a water-dilutable binder, cross-linked polymeric microparticles with a diameter of 0.01 to 10 µm, pigment particles and a thickener, which contains (sic) 0.1 to 4.0% by weight, preferably 1.0 to 2.0% by weight, based on the binder solids, of xanthan gum and 5 to 80% by weight, preferably 30 to 70% by weight, particularly preferably 40 to 60% by weight, based on the binder solids, of crosslinked polymeric microparticles, the crosslinked polymeric microparticles being obtainable
(a) by dispersing a mixture of a component (A) and a component (B) in an aqueous medium, wherein
— the component (A) consists of one or more polyester polyol(s) containing at least two hydroxyl groups and
— the component (B) consists of one or more optionally blocked polyisocyanate compound(s),
the components (A) and/or (B) possessing a sufficient number of ionic groups to form a stable dispersion and at least a part of the components (A) and/or (B) containing more than two hydroxyl or optionally blocked isocyanate groups per molecule, and
(b) by subsequently heating the resultant dispersion to a temperature high enough for the components (A) and (B) to react with the formation of crosslinked polymeric microparticles.

5. Water-dilutable coating compositions as claimed in claim 4, which contains (sic) a mixture of a water-dilutable melamine resin and a water-dilutable polyester resin as water-dilutable binder.

6. Water-dilutable coating compositions as claimed in one of claims 4 or 5, which contain metallic pigments.

**Revendications**

1. Procédé de fabrication d'un revêtement à plusieurs couches, protecteur et/ou décoratif, sur une surface de substrat, suivant lequel :
(1) on applique, comme composition de revêtement de base, une composition de revêtement de base diluable dans l'eau, pseudoplastique et/ou thixotrope, cette composition de revêtement de base contenant de l'eau, le cas échéant des solvants organiques, un liant diluable dans l'eau, des microparticules de polymère réticulé ayant un diamètre de 0,01 à 10 µm, des particules de pigment et un épaississant,
(2) à partir de la composition appliquée à l'étape (1), on forme un film de polymère sur la surface,
(3) sur la couche de base ainsi obtenue, on applique une composition de couche de revêtement transparente appropriée, puis
(4) on soumet la couche de base à une cuisson conjointement avec la couche de recouvrement,
caractérisé par le fait que la composition de revêtement de base contient 0,1 à 4,0% en poids, de préférence, 1,0 à 2,0% en poids de xanthanne, par rapport à la teneur en corps solides du liant, et 5 a 80% en poids,de préférence, 30 à 70% en poids, de façon particulièrement préférée, 40 à 60% en poids, par rapport à la teneur en corps solides du liant, de microparticules de polymère réticulé, les microparticules de polymère réticulé pouvant être obtenues
(a) en dispersant, dans un milieu aqueux, un mélange d'un composant (A) et d'un composant (B),
— le composant (A) consistant en un ou plusieurs polyesterpolyol(s) contenant au moins deux groupes hydroxyle, et
— le composant (B) consistant en un ou plusieurs composé(s) de type polyisocyanate éventuellement bloqué,
et le composant (A) et/ou (B) disposant d'un nombre de groupes ioniques suffisant pour la formation d'une dispersion stable, et au moins une partie du composant (A) et/ou (B) contenant plus de deux groupes hydroxyle, respectivement isocyanate éventuellement bloqués, par molécule, et
(b) en chauffant ensuite la dispersion ainsi obtenue à une température suffisamment élevée pour que les composants (A) et (B) soient transformés en microparticules de polymère réticulé.

2. Procédé selon la revendication 1, caractérisé par le fait que la composition de revêtement de base contient, comme liant diluable dans l'eau, un mélange d'une résine de mélamine diluable dans l'eau et d'une résine de polyester diluable dans l'eau.

3. Procédé selon l'une des revendications 1 ou 2, caractérisé par le fait que la composition de revêtement de base contient des pigments métalliques en paillettes.

4. Compositions de revêtement diluables dans l'eau, qui sont appropriées pour la fabrication de la couche de base de laquages à deux couches du type revêtement de base/revêtement transparent, et qui contiennent de l'eau, le cas échéant des solvants organiques, un liant diluable dans l'eau, des microparticules de polymère réticulé ayant un diamètre de 0,01 à 10 µm, des particules de pigment et un épaississant, caractérisées par le fait qu'elles contiennent 0,1 à 4,0% en poids, de préférence, 1,0 à 2,0% en poids, de xanthanne par rapport à la teneur en corps solides du liant, et 5 à 80% en poids, de préférence, 30 à 70% en poids, de façon particulièrement préférée, 40 à 60% en poids, par rapport à la teneur en corps solides du liant, de microparticules de polymère réticulé, les microparticules de polymère réticulé pouvant être obtenues

(a) en dispersant, dans un milieu aqueux, un mélange d'un composant (A) et d'un composant (B),

— le composant (A) consistant en un ou plusieurs polyesterpolyol(s) contenant au moins deux groupes hydroxyle, et

— le composant (B) consistant en un ou plusieurs composé(s) de type polyisocyanate éventuellement bloqué,

et le composant (A) et/ou (B) disposant d'un nombre de groupes ioniques suffisant pour la formation d'une dispersion stable, et au moins une partie du composant (A) et/ou (B) contenant plus de deux groupes hydroxyle, respectivement isocyanate éventuellement bloqués, par molécule, et

(b) en chauffant ensuite la dispersion ainsi obtenue à une température suffisamment élevée pour que les composants (A) et (B) soient transformés en microparticules de polymère réticulé.

5. Compositions de revêtement diluables dans l'eau selon la revendication 4, caractérisées par le fait qu'elles contiennent, comme liant diluable dans l'eau, un mélange d'une résine de mélamine diluable dans l'eau et d'une résine de polyester diluable dans l'eau.

6. Compositions de revêtement diluables dans l'eau selon l'une des revendications 4 ou 5, caractérisées par le fait qu'elles contiennent des pigments métalliques en paillettes.